# EUROPEAN PATENT APPLICATION

(11) **EP 1 205 933 A2**
(43) Date of publication of application: **15.05.2002**
(21) Application number: 01126442.1
(22) Date of filing: 08.11.2001
(51) Int. Cl.: G11B 27/32

(54) **Recording apparatus and method with automatic chapter making capability**

(30) Priority: 08.11.2000 JP 2000340913
(71) Applicant: Kabushiki Kaisha Toshiba, Tokyo 105-8001 (JP)
(72) Inventor: Gunji, Masanori, Minato-ku, Tokyo 105-8001 (JP); Kataoka, Hideo, Minato-ku, Tokyo 105-8001 (JP); Yoneyama, Takahisa, Minato-ku, Tokyo 105-8001 (JP)
(74) Representative: HOFFMANN - EITLE

(57) **Abstract**

A chapter is made automatically, using a location at which recording is paused and then resumed, as a chapter border.

## Description

The present invention is advantageous when applied to a recorder and player capable of handling information recording and playing media such as a hard disk and a DVD (Digital Versatile Disk) simultaneously or separately, and individually. Particularly, the present invention relates to a recorder and player with an automatic chapter making capability which is a function to set a chapter in a title (program) automatically.

As is well known, recently, development has been made for an optical disk player capable of playing a moving picture recorded on an optical disk. The optical disk contains image data, audio data and so on. The player has gained popularity in such pieces of equipment as an LD (Laser Disk) player and a video CD (Compact Disk) player, for use in playing movie software, karaoke software and the like.

In the course of the above development, currently, a DVD standard is proposed which is based on two MPEFG (Moving Picture Image Coding Experts Groups) methods that have become to international standards, as well as based on AC (Audio Compression)-3 compression method.

This standard conforms to MPEG2 system layer, and supports the MPEG2 method as a moving picture compression method, whereas it supports AC-3 audio compression method and MPEG audio compression method as sound compression methods. In addition, for application to subtitles in movie and karaoke software, the standard makes it possible to handle sub-image data prepared through run-length compression of bitmap data. Still further, for playing apparatuses, the standard sets forth a configuration in which special playing operation control data (Navipack) is added for fast-forward playing, fast-rearward playing and so on.

Still further, the standard supports ISO (International Organization for Standardization) 9660 and micro UDF (Universal Disk Format) standards for enabling computers to read disk data.

As for standards for the media themselves, there is one for DVD-ROM (Read Only Memory) which is a medium for a DVD-video. In addition, a standard has been completed for DVD-RAM (Random Access Memory: Having a recording capacity of 4.7 GB (Giga Bytes) approx.) Meanwhile, DVD-RAM drives are becoming popular as a computer peripheral.

Further, currently, efforts are being made to complete a standard for RTR (Real Time Recording)-DVD. This will realize a real-time information recording and playing system through the use of DVD-RAM. The new standard will finish its verification stage in the near future.

This standard is based on the standard for DVD-video apparatuses currently used on the market. Further, along with the development in RTR-DVD, standardization of a file system therefor is underway now.

On the other hand, development is being made for a method for enabling recording and playing of broadcast signals using a hard disk drive (HDD) incorporated in a recorder and player. Use of the hard disk drive enables to record data of over 100 GB.

The above hard disk drive and the DVD systems are fully capable of including, as does a conventional VTR (Video Tape Recorder), recording reservation capability. Also, since these recording media have a large storing capacity, it is possible to record a large number of programs (titles) continuously.

If a large number of programs are recorded continuously, the user often wants to make a chapter. Yet, conventionally, there is no method for making the chapter easily.

The present invention has been made in consideration of the above circumstances, with an object to provide a recorder and player with automatic chapter making capability.

According to one aspect of the present invention, there is provided an apparatus for recording video data on recording medium having a chapter information recording area comprising:
a recording processor recording video data on the recording medium;
a pausing director directing a temporary halt of a recording operation to the recording processor;
a chapter manager automatically storing a position information of the video data to the chapter information recording area as a chapter boundary information of the video data when a recording process of the recording processor is temporarily halted by the direction of the pausing director.

According to a configuration as the above, while recording a broadcast signal, the user can simply perform a pause operation when, for example, a commercial begins, thereby automatically making a chapter. Many TV programs and the like use commercials as a divider between programs. Thus, the above method can simplify chapter management of a recording medium which contains a large number of programs.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for illustrating an example of the recorder and player with automatic chapter making capability according to the present invention;
FIG. 2 is a diagram for illustrating a hierarchical structure of a video manager VMG according to the embodiment;
FIG. 3 is a diagram for illustrating in detail a program chain information table PGIT according to the embodiment;
FIG. 4 is a diagram for illustrating a hierarchical structure of a movie AV file information table M_AVFIT according to the embodiment;
FIG. 5 is a diagram for illustrating a remote controller used by a user to enter operating information to the recorder and player according to the embodiment.
FIG. 6 is a diagram for illustrating a display screen when an edit navigation key on the remote controller is operated;
FIG. 7 is a diagram for illustrating an example of chapter making screen when chapter making is selected according to the embodiment.
FIG. 8 is a diagram for illustrating how the screen display changes at the time of chapter making according to the embodiment;
FIG. 9 is a diagram for illustrating how the screen display changes at the time of chapter deletion according to the embodiment; and
FIG. 10 is a flowchart for illustrating an automatic chapter making operation according to the embodiment.

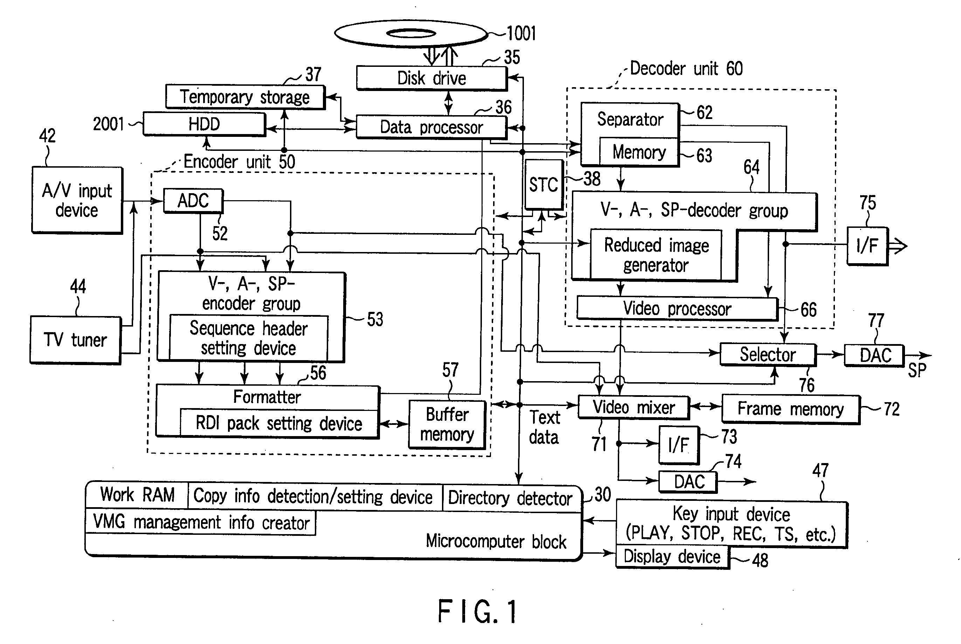

Now, an embodiment of the present invention will be described in detail, with reference to the drawings. FIG. 1 shows a recorder and player to be described in the present embodiment. According to the embodiment, the recorder and player is capable of handling both of the DVD-RAM and the hard disk. However, the present invention is applicable to a recorder and player capable of handling only one of the recording media.

FIG. 1 shows a number of blocks, which are roughly divided into two groups, i.e. those on the left hand side that relate to recording, and those on the right hand side that relate to playing.

Playing process in the recorder and player shown in FIG. 1 is performed in accordance with program chain information (PGCI) which shows a sequence of playing programs. A plurality of programs (PGs) can be assigned to the PGCI, and cell information (CI) is defined in the PGCI.

With the above arrangement, the CI specifies a cell entry point (C_EPI), whereby a VOB as the object of the playing operation is identified. Also, there is a special PGC called original PGC, for playing in the order of the original recording. Information of the original PGC is recorded as ORG_PGCI.

Further, with the above, video data attribute information (resolution information, aspect information audio attribute information, and so on) is recorded in stream information (STI) in VMGI. Also, a pack is used as the smallest unit of data transmission processing. Further, a cell is used as the smallest unit of logical processing, and all the logical processes are performed by the unit of cell. Therefore, when recording is made, recording signal is converted to conform to the format described above.

The recorder and player mainly comprises: a hard disk drive 2001; a disk drive 35 which drives an optical disk 1001 that serves as an information storing medium capable of including a video file, and executes writing and reading of information to and from the optical disk 1001; an encoder unit 50 as a main component of the recording side; a decoder unit 60 as a main component of the playing side; and a microcomputer block 30 controlling overall operation of the recorder and player.

The encoder unit 50 includes: an encoder group 53 which includes an ADC (Analog Digital Converter) 52, a V (Video) encoder, an A (Audio) encoder, and an SP (sub-picture) encoder; a formatter 56 which converts output from each of the encoders in accordance with a predetermined format; and a buffer memory 57.

The ADC 52 is supplied with an external analog video signal plus an external analog audio signal from the AV input device 42, and with an analog video signal plus an analog audio signal from a TV(Television) tuner 44.

The ADC 52 digitalizes the inputted analog video signal at a sampling frequency of 13.5 MHz and quantized bits of 8 bits for example. In other words, each of the luminance component Y, color difference component Cr (or Y-R) and color difference component Cb (or Y-B) is quantized in 8 bits.

Likewise, the ADC 52 digitalizes the inputted analog audio signal at a sampling frequency of 48 kHz and quantized bits of 16 bits for example.

If input made to the ADC 52 is a digital video signal or a digital audio signal, the ADC 52 let the digital video signal and the digital audio signal pass through. With such an arrangement, however, these digital video signal and digital audio signal may undergo jitter reduction process, sampling rate changing process and so on, without alteration made to the signal content.

The digital video signal outputted from the ADC 52 is sent, via the V-encoder, to the formatter 56. The digital audio signal outputted from the ADC 52 is sent, via the A-encoder, to the formatter 56.

The V-encoder converts the inputted digital video signal into a digital signal compressed at a variable bit rate in accordance with the MPEG2 or MPEG1 standard. Also, the A-encoder converts the inputted digital audio signal into a digital signal compressed at a fixed bit rate or digital signal in the form of linear PCM, in accordance with the MPEG or the AC-3 standard.

If sub-picture information is inputted from the AV input device 42 (e.g. a signal from a DVD video player provided with an independent sub-picture signal output terminal), or if a DVD video signal having such a data form is broadcasted and received by the TV tuner 44, the sub-picture signal (sub-picture pack) contained in the DVD video signal is inputted to the SP-encoder. The sub-picture signal inputted into the SP-encoder is arranged into a predetermined signal form and then sent to the formatter 56.

The formatter 56 performs a predetermined signal processing to the inputted video signal, audio signal, sub-picture signal and so on, using the buffer memory 57 as a work area, and then outputs record data that conform to a predetermined DVD format (file structure), to a data processor 36.

It should be noted here that according to the recorder and player, the information encoded by the encoder unit 50 and relevant management information generated can be supplied to the hard disk drive 2001 via the data processor 36, and recorded on the hard disk. Further, information recorded on the hard disk can be recorded on the optical disk 1001 via the data processor 36 and the disk drive 35.

Still further, the information encoded by the encoder unit 50 and relevant management information generated can be recorded on the optical disk 1001 via the data processor 36 and the disk drive 35.

Further, according to the recorder and player, if information recorded on the hard disk of the hard disk drive 2001 is of the same data format as of the optical disk 1001, the information on the hard disk can be recorded on the optical disk 1001, without performing the encoding operation.

Still further, if the information recorded on the hard disk of the hard disk drive 2001 is of a different data format from the data format as of the optical disk 1001, the information read out of the hard disk is encoded at the encoder unit 50, and then the encoded information can be recorded on the optical disk 1001.

Here, a standard encoding process for making record data to be recorded on the optical disk 1001 will be described briefly. Specifically, when the encoding process is started at the encoder unit 50, parameters necessary for encoding the video (main picture) data and the audio data are set.

Next, using the set parameters, the main picture data is pre-encoded, whereby an optimum code volume distribution for a given average transmission rate (recording rate) is calculated. Based on the code volume distribution thus obtained from the pre-encoding process, encoding process of the main picture data is performed.

With the above, encoding process of the audio data 'is performed simultaneously. Likewise, parameters necessary for encoding the sub-picture data are set, and encoded sub-picture data is prepared.

The encoded main picture data, audio data and sub-picture data are combined together, and then converted into a structure of video object set VOBS.

Specifically, setting of the cell as the smallest unit of main picture data (video data) is made and cell information is created. Next, setting of a cell form is made for cell that constitutes the program chain PGC, as well as setting of attributes of the main picture, sub-picture and sound. (Part of the attribute information comes from information obtained at the time of encoding each of the data.) Through the above process, a VMG file containing a variety of information is created.

The main picture data, audio data and sub-picture data as encoded, is divided into a predetermined size (2048 bytes) of packs. Each pack includes description as needed, of time stamps such as PTS (Presentation Time Stamp) which indicates a playing time, and DTS (Decoding time stamp) which indicates a decoding time. The sub-picture may be given the same PTS as of the main picture data or of the audio data in the same playing time band, with an arbitrary delay added.

So that each data can be played in the order of time code, the cells are arranged, by the unit of video object unit VOBU, at the top of which there is placed an RDI pack (equivalent to a navigation pack). As a result, a plurality of cells are made into a video object VOB. One or greater number of this video object VOB are gathered into a video object set VOBS, which is recorded in a movie video file, as a program.

A note should be made here that when a digital copy of a DVD playing signal is made from a DVD video player, there is no need for newly creating the cells, the program chain, the management table, time stamps and so on, because contents of these are already fixed.

System components involved in information reading and writing (recording and/or playing) from and to the optical disk 1001 mainly includes the disk drive 35, the data processor 36, a temporary storage 37, and an STC (System Time Counter or System Time Clock 38).

The temporary storage 37 is used for buffering a certain predetermined amount of data (data outputted from the encoder unit 50) to be written on the optical disk 1001 via the data processor 36 and the disk drive 35, as well as for buffering a certain predetermined amount of data (data to be inputted to the decoder unit 60) that have been read from the optical disk 1001 via the disk drive 35 and the data processor 36. The disk drive 35 is provided with a rotation drive controlling system, a laser driving system, optical system and so on for controlling the optical disk.

For example, if the temporary storage 37 is provided by a 4 MB (Mega Byte) semiconductor memory (DRAM), an amount of record data or play data possible to be buffered is of about 8 seconds based on an average recording rate of 4 Mbps (bits per second). Likewise, if the temporary storage 37 is provided by a 16 MB EEP (Electrically Erasable and Programmable) ROM (Flash Memory), an amount of record data or play data possible to be buffered is of about 30 seconds based on an average recording rate of 4 Mbps.

Further, if the temporary storage 37 is provided by a 100 MB ultra micro HDD (Hard Disk Drive), an amount of record data or play data possible to be buffered is of more than 3 minutes based on an average recording rate of 4 Mbps.

The temporary storage 37 may also be utilized in such a case that the optical disk 1001 has run out of its recording area in the course of recording and an amount of recording data must be stored for a short time until a new optical disk 1001 is loaded.

However, according to this recorder and player, since the hard disk drive 2001 has a large capacity, this device can be utilized advantageously.

The temporary storage 37 may also be utilized in such a case that the disk drive 35 is provided by a high speed drive (double speed or higher). In this case, an amount of data read by the higher speed drive in a given amount of time is greater than an amount read by the normal drive, and the extra amount of data may be buffered by the temporary storage. If such a buffering is made for read data at the temporary storage 37 during a play operation, even if an impact for example causes a reading error of the unillustrated optical head, the buffered data stored at the temporary storage 37 can supply a replacement data, protecting the ongoing picture in motion from being interrupted.

Under a control by the microcomputer block 30, the data processor 36 performs such operations as: supplying DVD record data outputted from the encoder unit 50 to the disk drive 35; downloading DVD play signal played back from the optical disk 1001 through the disk drive 35; rewriting management information recorded on the optical disc 1001; and deleting data (a file or a video object) recorded on the optical disk 1001.

The microcomputer block 30 includes an MPU (Micro Processing Unit) or a CPU (Central Processing Unit), a ROM in which a control program and so on are written, and a RAM which provides a work area necessary for program execution.

The MPU of the microcomputer block 30 receives operation information from a key input device 47, and based on the control program stored in the ROM and by using the RAM as its work area, performs such operations as detecting a faulty bit, detecting a blank area not recorded yet, setting a location where video recording information is to be stored, recording UDF, and setting an AV address.

Further, the microcomputer block 30 has an information processing devices necessary for controlling the entire system, and includes a copy information detector/setter, a directory detector, and a VMG management information generator.

Some results of operation performed by the MPU, i.e. information to be noticed to the user of the disc drive 35, are displayed in a display device 48 of the DVD video recorder or in an unillustrated monitor display, in the form of OSD (Onscreen Display).

It should be noted here that the microcomputer block 30 can control the disk drive 35, the data processor 36, the encoder unit 50 and/or the decoder unit 60 and so on, on the basis of time data from the STC 38. Recording and playing operation is normally executed in synchronization with the time clock signal from the STC 38. However, other operations may be executed at a different timing independently from the STC 38.

The decoder unit 60 includes: a separator 62 which takes individual packs separately from picture data of the pack structure; a memory 63 used for the pack separation and other signal processing; a decoder group 64 including a V-decoder which decodes main picture data (contents of the video pack) separated by the separator 62, an SP-decoder which decodes sub-picture data (contents of the sub-picture pack) separated by the separator 62, and an A-decoder which decodes audio data (contents of the audio pack) separated by the separator 62; and a video processor 66 which superimposes sub-picture data obtained from the SP-decoder as necessary, onto the main picture data obtained from the V-decoder, and then outputs the main picture with superimposition such as a menu, highlight buttons, subtitles and so on.

Output from the vide processor 66 is inputted to a video mixer 71. The video mixer 71 synthesizes text data. Also, the video mixer 71 is connected with a line through which signals from the TV tuner 44 and the A/V input device 42 are inputted directly.

The video mixer 71 is connected with a frame memory 72 for use as a buffer. If output from the video mixer 71 is digital, output to an external component is made via an interface (I/F) 73, whereas if output from the video mixer is analog, the output to an external component is made via a DAC 74.

If output from the A-decoder is digital, output to an external component is made via an interface (I/F) 75, whereas if the output the A-decoder is analog, it is sent via a selector 76 to a DAV 77 for analog conversion before outputted to the external component.

The selector 76 can select, upon direction by a select signal from the microcomputer block 30, the output from the ADC 52 when a signal from the TV tuner 44 and the A/V input device 42 is directly monitored. Analog audio signals are supplied to an unillustrated external component (a multi-channel stereo audio apparatus having 2-channel to 6-channel capability).

A flow of the video signal according to the apparatus described above will be described briefly as follows. First, an inputted AV signal undergoes digital conversion at the ADC 52. Video signal is inputted to the V-encoder, audio signal is inputted to the A-encoder, and character data such as from a character broadcast is inputted to the SP-encoder. The video signal undergoes MPEG compression, the audio signal undergoes the AC-3 compression or MPEG audio compression, and the character data undergoes the run-length compression.

The compressed data from each encoder is divided into packets so that each pack made therefrom will have the size of 2048 bytes. The data is then inputted to the formatter 56. The formatter 56 packs and multiplexes each of the packets, and then sends the multiplexed data to the data processor 36.

Here, the formatter 56 makes an RDI pack based on aspect information, and place this pack at the top of the video object unit (VOBU). The data processor 36 makes an ECC block for every 16 packs, attaches error correction data, and records the resulting output on the optical disk 1001 via the disk drive 35.

If the disk drive 35 is busy seeking, jumping tracks and so on, then the data is temporarily stored in the temporary storage 37 (e.g. a HDD buffer) until the DVD-RAM drive unit (the disk drive 35) becomes ready.

Further, the formatter 56 makes demarcation information during the recording, and sends the information periodically to the MPU of the microcomputer block 30 (e.g. information at a time of GOP top interruption).

The demarcation information includes the number of VOBU packs, end address of I picture from the top of the VOBU, and playing time of the VOBU.

At the same time, the aspect information is sent to the MPU when the recording is started. The MPU makes VOB stream information (STI). Here, the STI contains resolution data, aspect data, and so on. When playing, each of the decoders makes its initial settings based on the information.

It should be noted that according to the recordable and playable DVD, one video file is made per disk.

Now, there is an important point to note in a real time recorder and player utilizing the DVD. Specifically, in order to play continuously without running out of data while successive data is being accessed (during a seek), there has to be a minimum number of continuous sectors available. This unit of sectors is called CDA (Contiguous Data Area). In other words, this is a size of data agreed upon in advance, in order to realize the seamless play.

The CDA is advantageous if it is handled by the unit of ECC block. For this reason, the CDA size is given as a multiple of 16 sectors, and in the file system, recording is performed by the unit of CDA. In this case, however, if the disk does not have a blank area that fits the size of the CDA, the system allows a short sector used by another file to come into the CDA, thereby making possible to make the recording by the CDA unit.

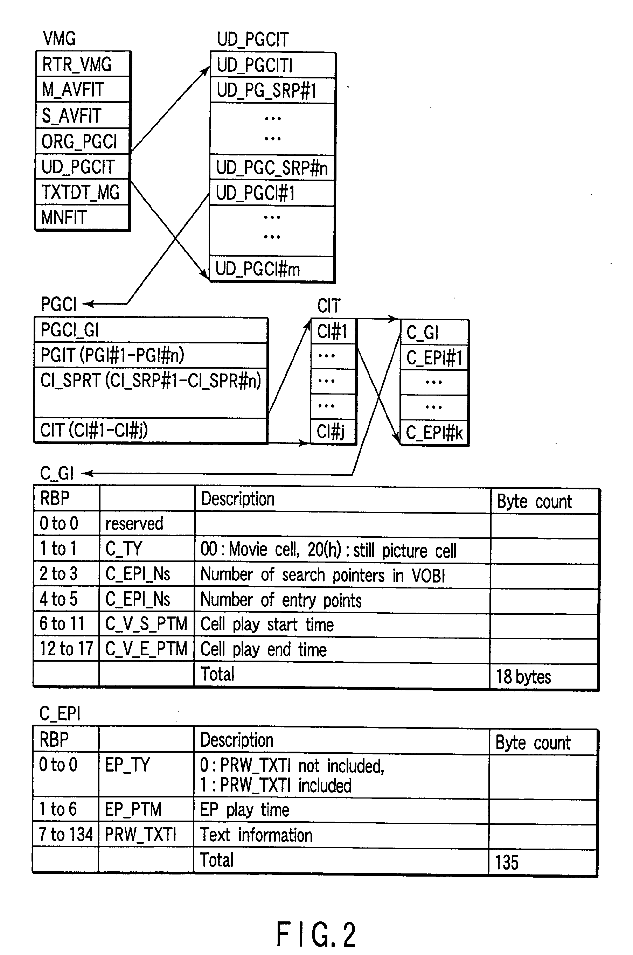

FIG. 2 shows a hierarchical structure of the video manager (VMG), and in particular, a detail of a system that manages data playing sequence.

The data playing sequence recorded in the video file is defined by a program chain (PGC) as shown in FIG. 2. In the program chain (PGC), a cell is defined, in which there is defined a VOB which is an object to be played.

Specific information of the PGC is recorded in program chain information (PGCI) in a VMG file. There are two kinds of PGCIs; one is an original PGCI (ORG_PGCI) and the other is a user-defined PGC table (UD_PGCIT).

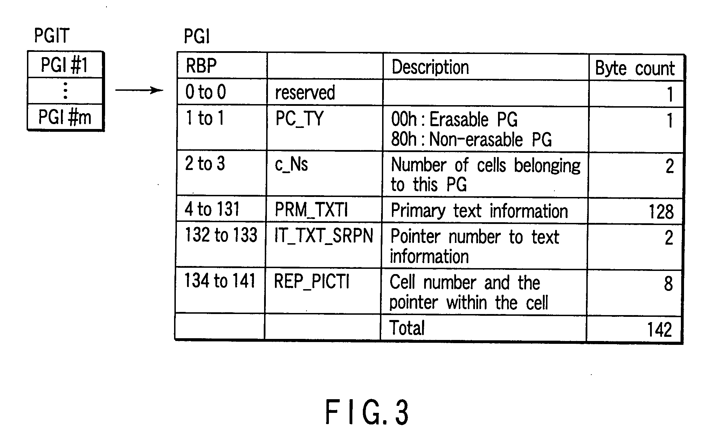

FIG. 3 shows further detail of the contents in a program chain information table (PGIT) in the program chain information (PGCI). The program chain information includes: program type (PG_TY) which indicates if the program corresponding to the program chain is erasable or not; the number of cells in the program (c_Ns), primary text information (PRIM_TXTI) described in the program, a pointer number to the text information (IT_TXT_SRPN), and representative picture information (REP_PICTI = cell number and the pointer within the cell).

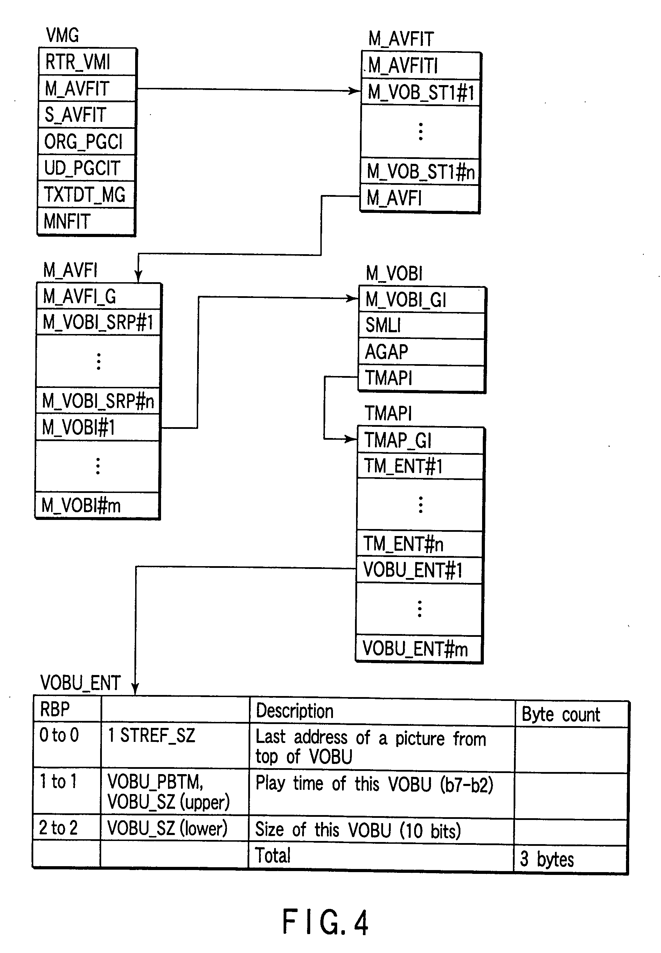

Also, FIG. 4 shows hierarchical structure of a movie AV file information table (M_AVFIT) in the video manager (VMG). This table information includes the number of VOBs (programs) on the record, stream numbers of audio streams and sub-picture streams for each of the VOBs, attributes (television standard, aspect ratio) of each VOB, and so on, in the form of stream information (M_VOB_STI).

Further, M_AVFI includes such general information, as an indication if the VOB is playable or provisionally deleted, as well as time and date information (recording time) when the VOB is recorded. Further, as individual information, the record includes a search pointer for each VOB, and system clock information as information (SMLI) necessary when a plurality of VOBs are to be played seamlessly.

Still Further, the record includes time map information (TMAPI) of the VOBUs in the VOB. The time map information can be used when play is made in a special play mode.

Here, before describing characteristics of the present embodiment, description will cover a chapter making guide function provided when a chapter is made manually. When titles are to be divided into a plurality of chapters, the chapter making guide function plays the actual title (program), allowing the user to visually confirm starting and ending pictures of each chapter on the display device (display screen).

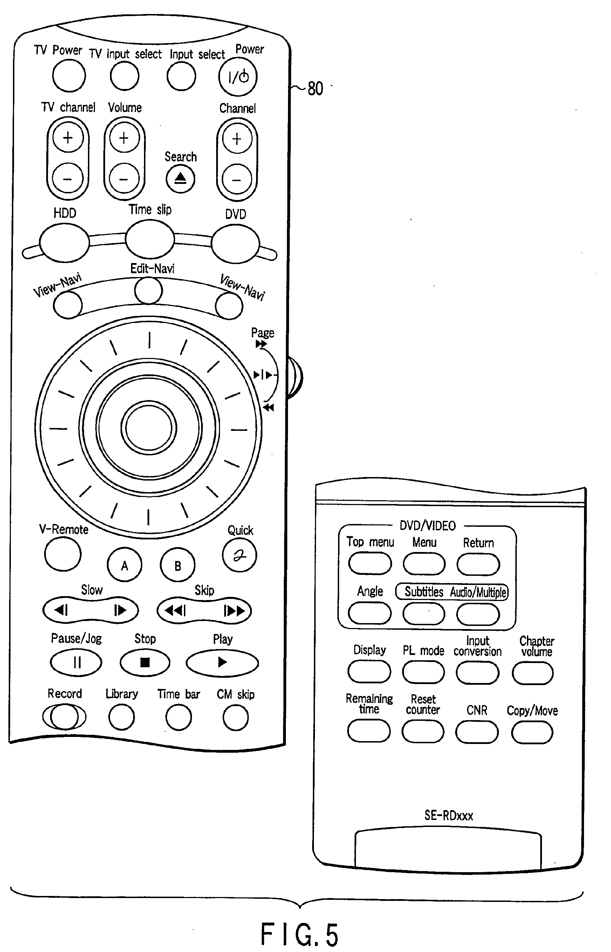

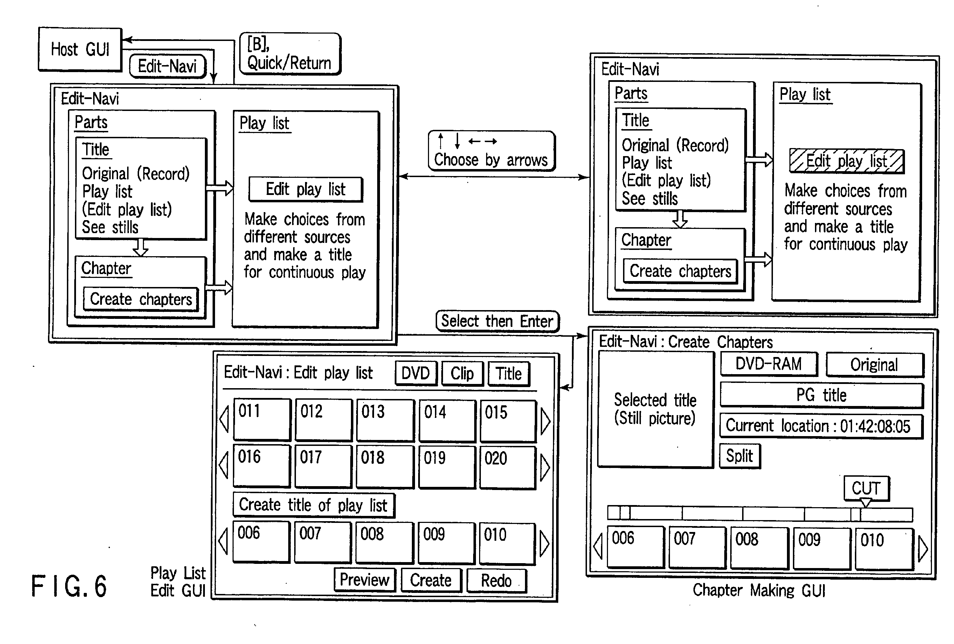

First, description will cover the display screen at the time of the chapter making. The user operates a remote controller 80 shown in FIG. 5. When an edit navigation key (Edit-Navi key) is pressed, as shown in FIG. 6, the screen shows Parts, Chapters, and Play List of a title that is selected as an object. The user moves the cursor onto the item Chapter and presses an enter key.

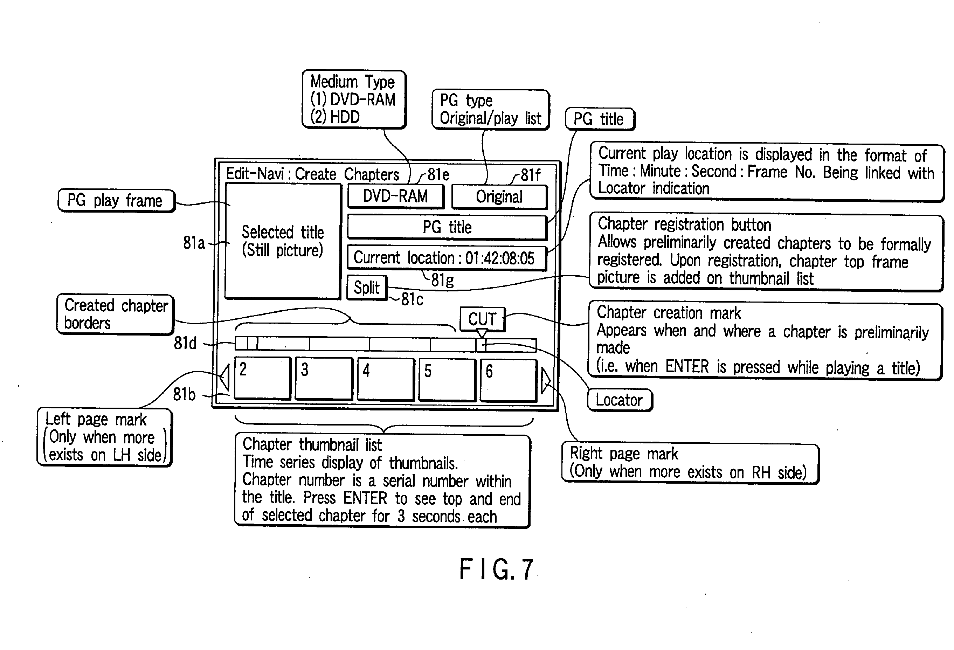

Then, a screen shown in FIG. 7 appears, on which a moving picture display area 81a is provided for actual movie display of the selected title. Further, a thumbnail display area 81b is provided for display of thumbnails as representative starting pictures of chapters. Further, a button area 81c is provided for chapter registration. Still further, in order to give the user an easy grasp of how many chapters have been made in the title, a bar indicator area 81d is provided.

Further, such areas are provided as an area 81e which indicates the object medium, an area 81f which shows whether the program is the original (corresponding to OPGC) or it is a play list (corresponding to UDPGC) set by the user, and an area 81g which shows a location of the picture currently displayed in the moving picture play area 81a in terms of a total amount of time measured from the top of the program.

The bar indicator area 81d also displays marks correspondingly to the number of chapters existing in the program. An example given in the figure shows a situation in which six chapters are made. In addition, when a plurality of thumbnails are on the thumbnail display area 81b, each of the thumbnails are accompanied by its thumbnail number. The figure shows an example in which the second to the sixth thumbnails are on the display. The first thumbnail is not shown in the figure. This is because the first thumbnail has been scrolled out of the screen due to limitation in the display area.

Further, according to the present embodiment, with a plurality of thumbnails on the display, a desired thumbnail may be selected by the cursor and then a delete command may be issued, whereby the selected thumbnail can be deleted and the chapter can be undone. In this case, the chapter represented by the deleted thumbnail can be merged into the previous chapter or the next chapter.

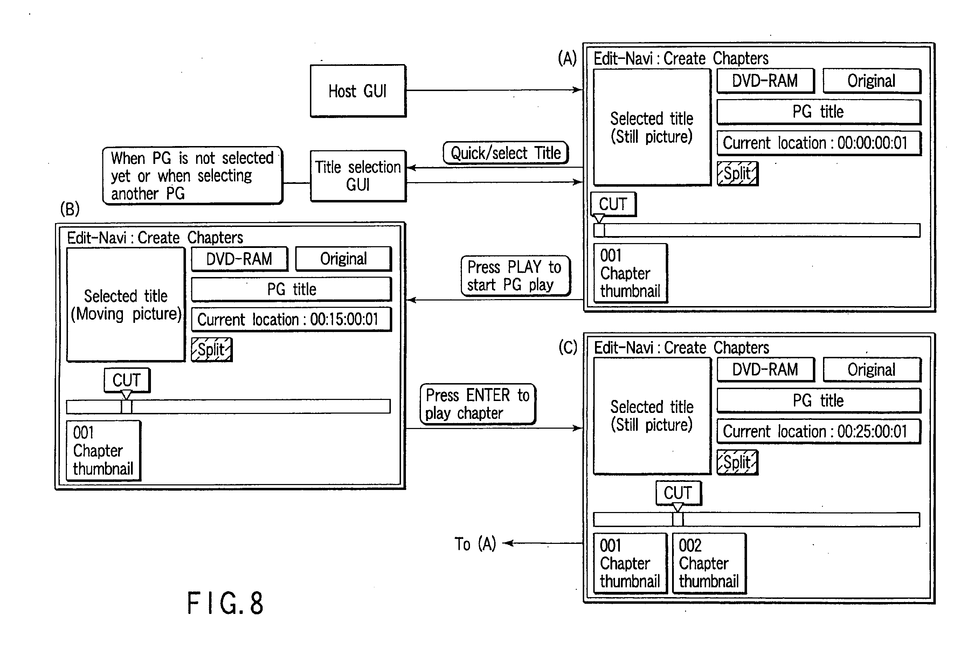

FIG. 8 includes blocks (A) to (C), which show screen transition, or how the display screen will change in the course of chapter making. First, as shown in (A) of FIG. 8, the user uses the moving picture play area 81a to search pictures by fast-forwarding or fast-rearwarding the title. As the user comes closer to his desired picture (e.g. near a chapter border), he checks the pictures frame by frame for example.

When he reaches the chapter border (or the top of the title in the first cycle of the operation), he moves the cursor onto a "split" (in the button area 81c) and presses the enter key, upon which, as shown in (B) of FIG. 8, a thumbnail of the top picture of the chapter is created and displayed as the first thumbnail (accompanied with the number) in the thumbnail display area 81b.

Now, the user goes back to the step of fast-forward search and proceed until he comes closer to a next chapter border. He then moves the cursor onto the "split" (in the button area 81c) and presses the enter key, upon which, as shown in (C) of FIG. 8, a thumbnail of a new chapter defined by this split point is created, which also defines the end of the first chapter. As described above, according to this recorder and player, the chapters can be made one after another.

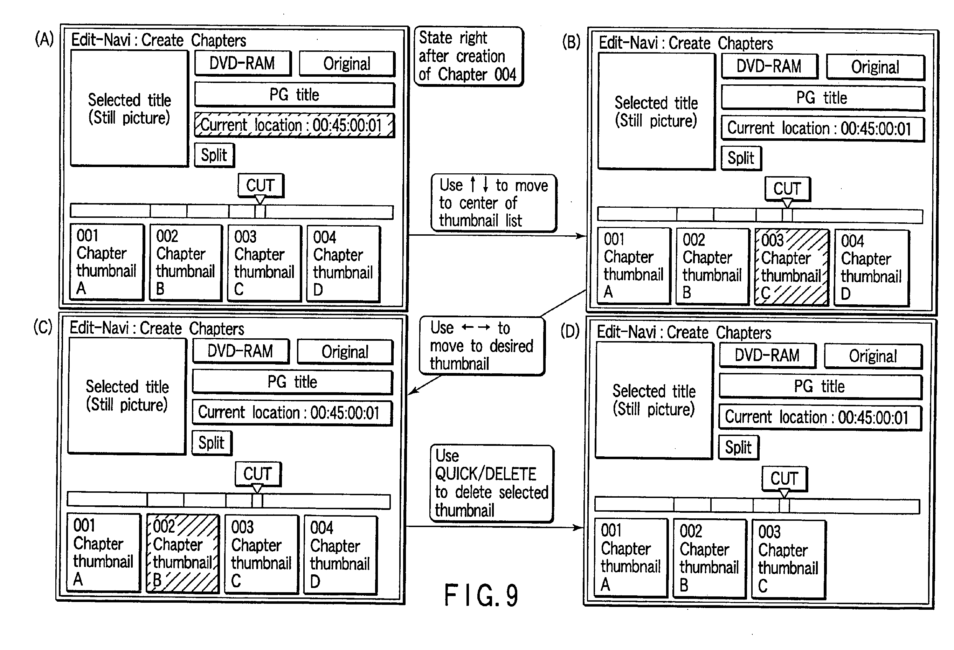

FIG. 9 includes blocks (A) to (D), which show screen transition, or how the display screen will change in the course of deleting a chapter which was made as described above. For example, as shown in (A) of FIG. 9, with the thumbnail display area 81b displaying four thumbnails A to D, the user may delete a chapter represented by the thumbnail B, by first moving the cursor onto the thumbnail B as shown in (B) and (C) of FIG. 9.

Then, as he operates a QUICK key on the remote controller 80, the word "DELETION" appears on the display. The user then move the cursor on this area and presses the enter key, whereupon as shown in (D) of FIG. 9, the thumbnail B is deleted and a resulting gap between the thumbnails A and B is squeezed up.

When combining two chapters into one, the user moves the cursor onto a corresponding one of the thumbnails. Then, as he operates the QUICK key on the remote controller 80, the word "Merge with previous chapter/merge with next chapter" appears on the display. The user then moves the cursor on a desired one of the choices and presses the enter key.

The description made as above takes an example in which chapters are set to a program which is already recorded. However, according to the recorder and player offered by the present embodiment, a further chapter making function can operate during recording, when a pause function is activated.

Specifically, the recording and playing media (e.g. the DVD or the hard disk) at least includes a video information recording area in which video information including a program (title) is stored, a video management information recording area in which management information for recording and playing the video information is stored, and a chapter management information recording area in which information for managing each chapter of the program is stored.

Further, the recorder and player comprises: record processing and play processing means for recording and playing information to and from the recording and playing medium; display signal deriving means for supplying the display with play signal from the play means; system controlling means for controlling the record processing and play processing means as well as the display signal deriving means, and pausing means for having the record processing means temporarily halt its record processing operation via the system controlling means.

With the above configuration, the chapter making function has means for registering on chapter management information a chapter border recognized as a discontinuation of record information between a point when the pausing means executes a pause and a point when the recording is resumed. Also, the recorder and player further comprises means for creating a thumbnail from a top picture of the recording when the recording is resumed.

In the chapter management information, a chapter border is handled as entry point information. Thus, for example, a chapter border can be managed as a play list entry point (which specifies UD_PGC in FIG. 2). Alternatively, however, the management may be made separately, treating the chapter border information as chapter entry information.

If chapter selection is performed during a play, an arrangement should simply be that a plurality of play lists is skipped so that the playing operation can be started from a desired play list entry point.

The recording and playing medium may further contain thumbnail management information, and the thumbnail management information may indicate an entry point of a picture from which the thumbnail was made in the program. Alternatively, the thumbnail may be made independently from the program, and recorded on the recording and playing medium.

Further, as for selective play of a chapter, a plurality of thumbnails may be displayed and a desired thumbnail may be selected for the play by moving the cursor, whereby a play list entry point corresponding to the thumbnail can be recognized and the play operation can be started.

Further, the pausing means operates in response to an operation by the user. However, if pause should be made upon a commercial, the pausing means may automatically execute a pause upon detection of a change in the input signal, such as audio signal changed to e.g. stereo.

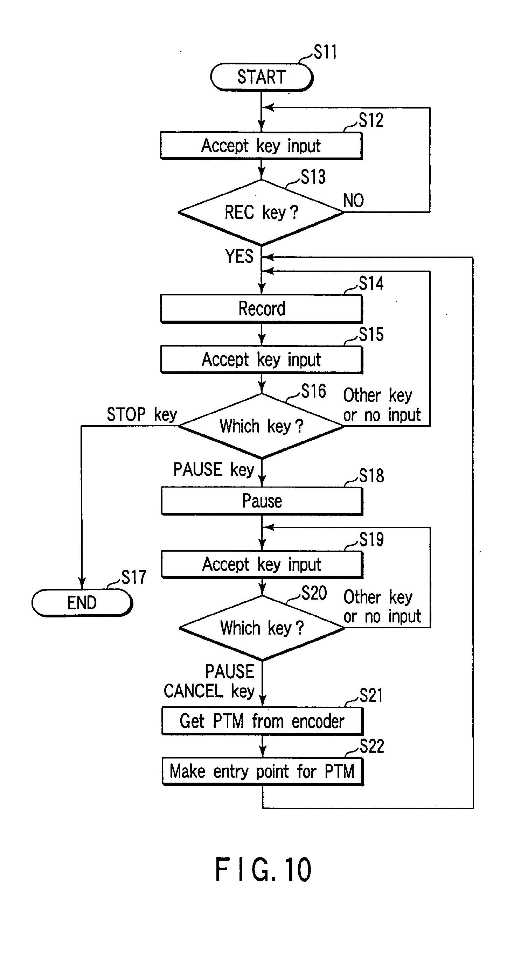

FIG. 10 is a flowchart showing an overall operation of the automatic chapter making by pausing. First, the process is started (Step S11). The microcomputer block 30 becomes ready to accept a key input in Step S12. In Step S13, the process checks if a RECORD key has been operated or not. If the key is not operated, then the process goes back to Step S12.

On the other hand, if Step S13 finds that the RECORD key has been operated (YES), then the microcomputer block 30 performs the recording operation in Step S14, begins to accept key operation in Step 15, and in Step S16, checks if there is an input via the STOP key, PAUSE key, any other key, or there is no key input.

If the STOP key has been operated, the microcomputer block 30 finishes the process (Step S17). If the PAUSE key has been operated, the process goes to Step S18, where a pause operation is executed. Then the process goes to Step S19 to accept a key input, and in Step S20, checks which of the keys, i.e. the pause cancellation key or others, has been operated.

If the microcomputer block 30 finds in Step S16 that there has been no key input or the input is other than via the STOP key or the PAUSE key, the process is brought back to Step S14.

Thereafter, when the pause cancellation key is operated, in Step S21 the microcomputer block 30 obtains a PTM (Presentation Time Stamp) from the encoder unit 50, and then in Step S22, makes an entry point indicating the obtained PTM, and brings the process back to Step S14.

The present invention is not limited to the embodiment described above, and may be varied in many ways within the scope of the invention.

## Claims

1. An apparatus for recording video data on recording medium having a chapter information recording area **characterized by** comprising:
a recording processor recording video data on the recording medium;
a pausing director directing a temporary halt of a recording operation to the recording processor;
a chapter manager automatically storing a position information of the video data to the chapter information recording area as a chapter boundary information of the video data when a recording process of the recording processor is temporarily halted by the direction of the pausing director.

2. The apparatus according to claim 1, **characterized by** further comprising a thumbnail creator creating a thumbnail form a top picture when the recording processor restarts the recording operation after the temporary halt.

3. The apparatus according to claim 2, **characterized in that** the thumbnail creator stores a creating thumbnail on the recording medium.

4. The apparatus according to claim 1, **characterized in that** the pausing director including a remote controller having a pause button.

5. The apparatus according to claim 1, **characterized in that** the pausing director automatically executes a pausing operation upon a detection that audio signal of the video data has changed from a monophonic signal to a stereophonic signal.

6. A method for recording video data on recording medium having a chapter information recording area, comprising the steps of:
recording video data on the recording medium;
temporarily halting a recording operation of the recording step;
automatically storing a position information of the video data to the chapter information recording area as a chapter boundary information of the video data when a recording process is temporarily halted.

7. The method according to claim 6, **characterized by** further comprising a step of creating a thumbnail from a top picture when the recording operation is restarted after the temporary halt.

8. The method according to claim 7, **characterized by** further comprising a step of storing a created thumbnail on the recording medium.
